# EUROPEAN PATENT SPECIFICATION

(11) **EP 0 448 329 B1**
(45) Date of publication and mention of the grant of the patent: **31.05.1995**
(21) Application number: 91302325.5
(22) Date of filing: 18.03.1991
(51) Int. Cl.: B31B 1/84, F16B 21/10, B23P 19/04

(54) **Container fitting**
Behälterelement
Raccord de goulot pour un récipient

(30) Priority: 19.03.1990 GB 9006128
(43) Date of publication of application: 25.09.1991
(73) Proprietor: UNILEVER PLC, London EC4P 4BQ (GB); UNILEVER N.V., 3013 AL Rotterdam (NL)
(72) Inventor: Lenstra, Antoon, NL-8162 CX Epe (NL); Renaud, Johannes Pieter Paulus, NL-8162 EE Epe (NL)
(74) Representative: Ford, Michael Frederick

(56) References cited:
- EP-A- 0 018 325
- EP-A- 0 342 729
- DE-U- 8 901 627
- FR-A- 1 390 415
- GB-A- 2 120 642
- US-A- 4 015 325
- US-A- 4 073 398

## Description

### FIELD OF THE INVENTION

This invention relates to a pouring spout or other fitting for attachment to sheet material of a container at a place where there is a hole through the material.

### SUMMARY OF THE PRIOR ART

It is known to construct a container from cartonboard or some other foldable board, provide a hole through the board and attach a pouring spout to a panel of the board at the aperture.

US-A-4669640 discloses a pouring spout with a flange which lies against the board material surrounding the hole. The flange is inside the carton and is welded to it. If the board or the weld is weakened, for instance if the board delaminates, there is a possibility that the spout can be pushed into the carton.

Boxes which are in commercial production have a spout with a flange on the exterior of the box. This allows the cut edge of the board to come into contact with liquid product, for instance as the product is poured. This creates a risk that the product can then be absorbed into the board by capillary action (wicking).

US-A-3412919 and EP-A-342729 show spouts and grommets which provide flanges inside and outside the box. These are made and put into position by re-shaping the material of the grommet/spout after it has been put into position.

EP-A-18325 illustrates grommets which are attached to board material in various ways. One possibility which is shown has two parts. One part has a flange to lie against the outside of the box around the hole and a tubular portion which projects through the hole from the flange. The other part is a ring which surrounds the tubular portion and lies against the board material on the inside of the box. The two parts are put into place from opposite sides of the board material and are shaped to snap fit together, with the board material around the hole clamped between them.

### SUMMARY OF THE INVENTION

According to the present invention there is provided a two-part fitting for attaching to a hole through sheet material of a container, one part of the fitting comprising a flange (to lie against the sheet material around the hole) and a generally tubular portion extending from the flange (to extend through and project beyond the hole) which portion tapers on its exterior, the other part of the fitting comprising a ring dimensioned to encircle the tapering tubular portion and be stretched by driving it along the tubular portion towards the flange, the tubular portion and ring being shaped to engage together to retain the stretched ring proximate the flange (with the panel material gripped between the ring and the flange).

Such a construction can allow the ring to be a very close, tight fit to the tubular portion adjacent the hole and can also enable the fitting to have a very positive grip on the sheet material of the container. The weaknesses of a flange which is held to only one surface of a panel are avoided.

A very considerable advantage is that the taper and ring can be dimensioned to allow the unstretched ring to pass through the hole. This makes it possible to assemble "blind", working from only one side of the sheet material.

For this purpose it is preferable that when the unstretched ring is fitted over the smallest part of the tapering portion, it has lateral dimensions which are generally less than those of the flange, and more preferably do not substantially exceed the lateral dimensions of the section of the tubular portion adjacent the flange.

It is also preferable that the taper should be of sufficient extent that the unstretched ring can pass through the hole, yet the section of the tubular portion adjacent the flange can be a good fit to the hole. For this purpose it is desirable that the lateral dimensions of the smallest part of the tapered portion should be less than those of the section adjacent the flange by an amount which is at least equal to the thickness of the ring. Then the unstretched ring can fit on the smallest part of the tapered portion, yet when it is fitted thereon it does not need to project laterally beyond the lateral dimensions of the section of the tubular portion, adjacent the flange.

The taper could extend progressively along the tubular portion, from the flange to the end of the tubular portion. Alternatively the taper may be more or less confined to a section spaced from the flange.

At least part of the tubular portion may take the form of a cage, composed of a plurality of axially extending member with spaces between. However, it is desirable that adjacent the flange the tubular portion forms a continuous wall around the axis of the hole, so as to prevent liquid contents of a container from contacting the cut edge of the panel material at the hole.

It is desirable that there should be means to retain the unstretched ring on the tubular portion. This is useful to enable the two parts to be handled together prior to attachment to a container. It may also be useful during the process of attaching to a container. A section of the tubular portion spaced from the flange may be shaped to engage the unstretched ring in order to retain it on the tubular portion.

An advantage of the invention is that the flange does not need to project laterally from the tubular portion by more than a modest amount. For a hole of approximately 20mm diameter, a flange of 2mm is adequate: the parts which grip the panel at the margin of the hole also serve to reinforce the panel material. The flange projection from the tubular portion may well be no more than 15% of the width across the hole.

The fitting of the invention may be circular, intended for a circular hole. However, non-circular shapes are also possible because there is no need for rotation of the two parts relative to each other. Thus a square tubular portion or an elliptical one could be used if desired.

The fitting of the invention could take the form of a grommet, protecting the cut board material around a hole through a panel. A separate closure member or pouring spout might then be attached to the grommet as and when required.

Preferably, however, the fitting is a pouring spout, with a second tubular portion which constitutes a spout extending from the flange on the opposite side to the first said tubular portion. Such a spout may be screw threaded to receive a screw cap as a closure. Such a screw thread could also be used for example to attach a tube, for pouring the contents of the container down the tube, or used to attach a dispensing pump. Yet again, a spout could have features other than a screw thread, useful for attaching a closure of some kind.

The fitting of the invention is preferably injection moulded from a thermoplastic. The two parts may be moulded entirely separately, or may be moulded in the same mould, joined by at least one breakable link. Such a link could consist of a thin strip of material which is broken when the ring is fitted onto the tubular portion.

Possibly, one or more breakable links could position the ring relative to the other part of the fitting, in readiness for the ring to be moved onto the tubular portion by a machine. A further possibility is that the ring is moulded in a position already encircling a part of the tubular portion spaced from the flange, and held to the tubular portion by one or more breakable links which are broken when the ring is driven along the taper into a position proximate the flange.

A suitable thermoplastic material for the ring and for the tubular portion plus flange is polypropylene.

The container panel to which the fitting is attached could be made of a variety of sheet materials. Particularly envisaged, however, is a foldable sheet board material which has sufficient stiffness to retain its shape and can be cut and creased to form a blank which is then assembled to form a container. The foldable sheet board material may be a laminate of paper and/or fibreboard layers with surface layers of a thermoplastic film to provide impervious surfaces.

In a further aspect, this invention provides a container of sheet material with a through hole and a fitting in accordance with the first aspect of this invention attached to the sheet material so as to lead through the hole.

Containers with fittings in accordance with this invention may be used for a variety of pourable products. Possibilities include a wide variety of liquid products notably dairy products, liquid detergents and fabric conditioners.

When a fitting in accordance with the invention is attached to sheet material, the tubular portion is passed through the hole after which the ring is driven along the tubular portion until the material around the hole is trapped between the flange and the stretched ring. This could be done by working from both sides of the sheet material before the container has been fully formed. If the fitting has a second tubular portion to receive a closure, it is possible that the fitting could be attached with the closure already in place. A related possibility, which may be used in addition, is to make the fitting with an integral closure, breakable by the user. This would give a tamper-evident closure. Both of these possibilities would require working from both sides of the sheet material when attaching the fitting.

By contrast, as mentioned above, an advantage of the invention is that the fitting can be attached to a fully formed closed container.

In a process for attaching to a closed container, the ring is fitted over the smallest part of the tubular portion before this is inserted through the hole (unless breakable links between the ring and the second section make this unnecessary). An expansible tool is passed through the tubular portion, before or after inserting that portion through the hole. After the tubular portion has been inserted through the hole and the tool passed through the tubular portion, the tool is expanded laterally and drawn back so as to drive the ring along the taper towards the flange until the sheet material is gripped between the ring and the flange. The tool is then retracted laterally and drawn out through the fitting. If part of the tubular portion is a cage of axially projecting members, the expansible tool may conveniently fit through the gaps between these.

### BRIEF DESCRIPTION OF THE DRAWINGS

An embodiment of the invention will now be described, by way of example only, with reference to the accompanying drawings in which:
Fig. 1 is a side view of one part of a fitting, partly in cross-section;
Fig. 2 is a cross-sectional view of the ring;
Fig. 3 is a partial end view on the arrow III of Fig. 1;
Fig. 4 is a cross-sectional view of illustrating attachment of a fitting to a carton;
Figs. 5a-5f show how the attachment of a fitting to a carton is performed by means of an expansible tool.

### DESCRIPTION OF PREFERRED EMBODIMENTS

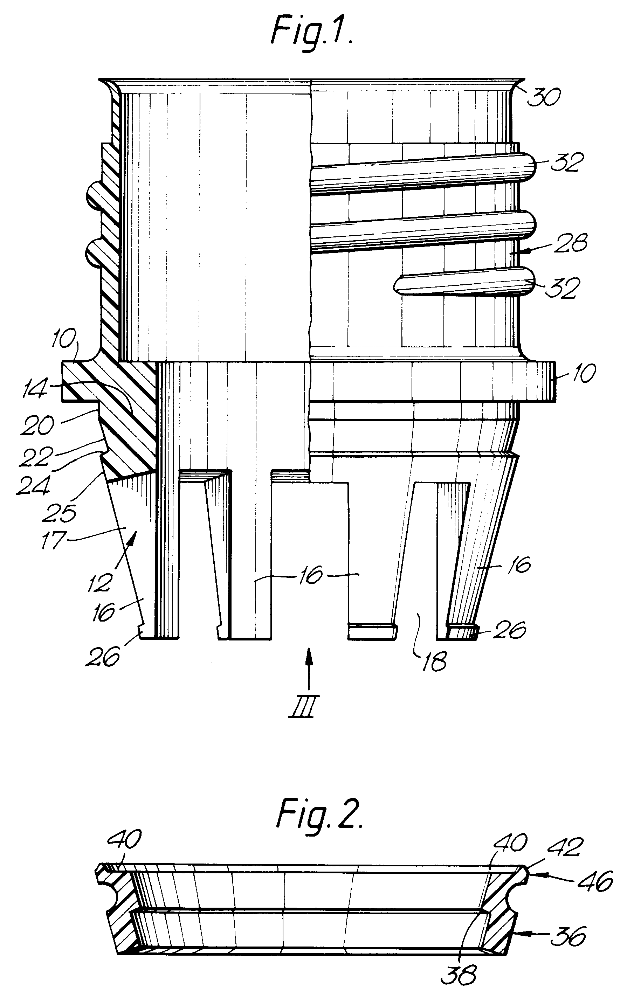

As shown in Fig. 1 the first, main part of a fitting has a flange 10 from which extends a tubular portion 12. A first section 14 of this tubular portion is circumferentially continuous. A second section of the tubular portion is formed as a cage of eight broad legs 16 which project axially and have gaps 18 between them.

The first section 14 has a cylindrical exterior surface 20 immediately adjacent to the flange 10. It then has a tapering exterior surface 22 leading to an outward step 24. From this step there is a tapering surface 25, whose taper is continued smoothly by the outside surface 17 of the legs 16. Each leg terminates in a small outward projection 26.

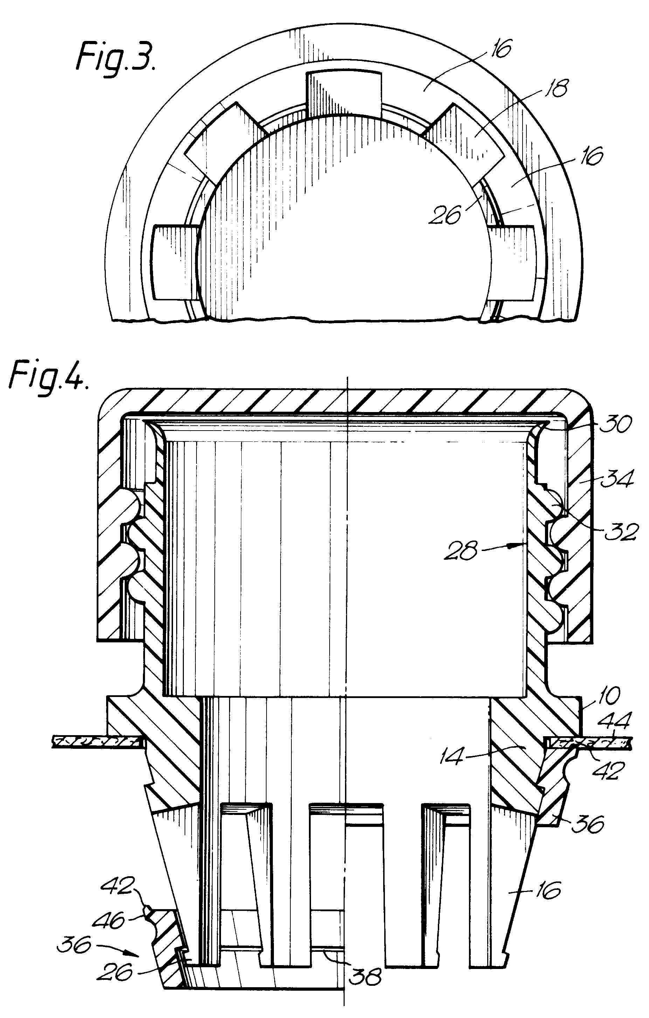

A second tubular portion 28 which forms a pouring spout extends in the opposite direction from the flange 10. This terminates in a pouring lip 30 and is formed with an exterior screw thread 32 enabling a screw cap 34 to be screwed onto the fitting as shown in Fig. 4.

The second part of a fitting is a ring 36 as illustrated by Fig. 3. It has tapering inside faces with a step 38 as shown. It has a flat end face 40 surrounded by a small rib 42.

When the fitting is attached to a carton, the flange 10 lies against one face of the cartonboard material 44 as illustrated in Fig. 4. As shown on the right hand side of Fig. 4, the ring 36 tightly encircles the first section 14 of the tapering portion and the end face 40 of the ring lies against the cartonboard material 40. The rib 42 at the periphery of the face 40 is pressed into the cartonboard material.

When liquid is poured out through the fitting, it can flow through the gaps 18, facilitating complete emptying of the container.

The left hand side of Fig. 4 illustrates that the ring 36, in unexpanded condition, will fit onto the end portions of the legs 16. The ring 36 is retained in this position by the projections 26 which engage behind the step 38. The ring is a loose fit in this position: there is a small amount of free play between the ring and the legs 16.

The widest external diameter of the ring 36 is at the point 46. This has the same diameter as the cylindrical surface 20. The external diameter of the step 24 is also the same as the diameter of the cylindrical surface 20. Consequently the step 24 and also the unexpanded ring 36 (at the ends of the legs 16 as shown on the left of Fig. 4) can pass through a hole which is able to receive the surface 20 inserted into it.

Attaching the fitting to a carton entails inserting the fitting through a hole in the carton until the flange 10 rests on the carton as shown in Fig. 4, then driving the ring 36 up the legs 16 from the position shown on the left of Fig. 4 to the position shown in the right where the step 38 has snapped over the step 24.

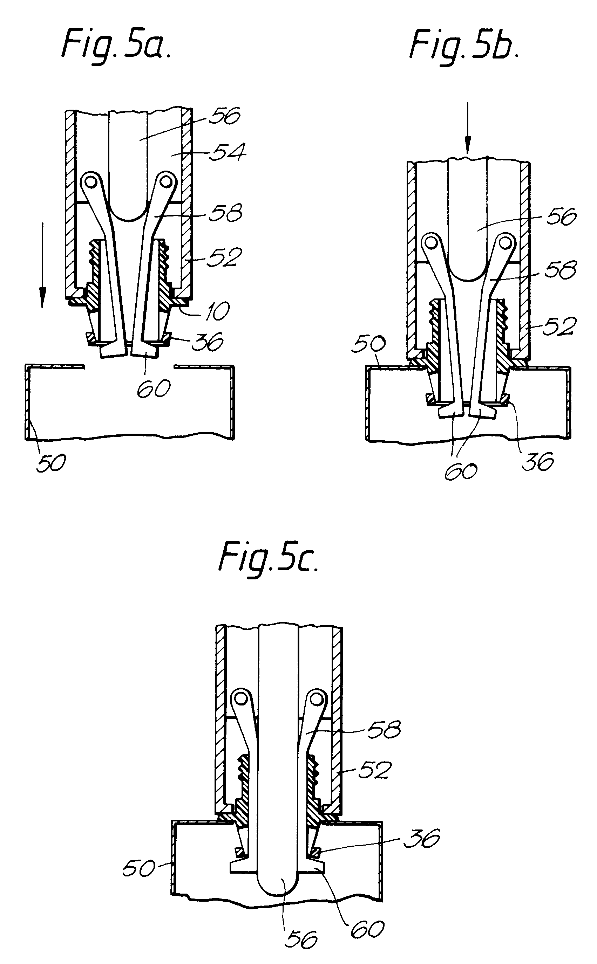

Attaching the fitting to a carton is accomplished with the tool illustrated in Figs. 5a-5f. This tool has several parts which reciprocate towards and away from the position of the carton. A carton is generally indicated as 50. The reciprocable parts of the tool are an external casing 52 which serves to press on the flange 10, a plunger 54 within the casing and a central pressure pin 56. A number of pulling fingers 58 are pivotally attached to the plunger 54. These fingers can be pushed radially outwards against spring bias (not shown) by moving the pressure pin 56 into the space between them as illustrated in Fig. 5c. These fingers 58 have outwardly projecting lugs 60 at their distal ends.

The procedure begins by fitting the ring 36 onto the legs 16 of the first part of the fitting, as at 45 in Fig. 4.

This assembly of the two parts of a fitting is placed on the tool as shown in Fig. 5a so that the fingers 58 pass through the central bore of the fitting. The tool is positioned over the hole in the carton as shown in Fig. 5a and moved towards the carton so that the tubular portion 12 of the fitting is inserted through the hole in the carton as shown by Fig. 5b. The flange 10 of the fitting abuts the outer surface of the carton around the hole.

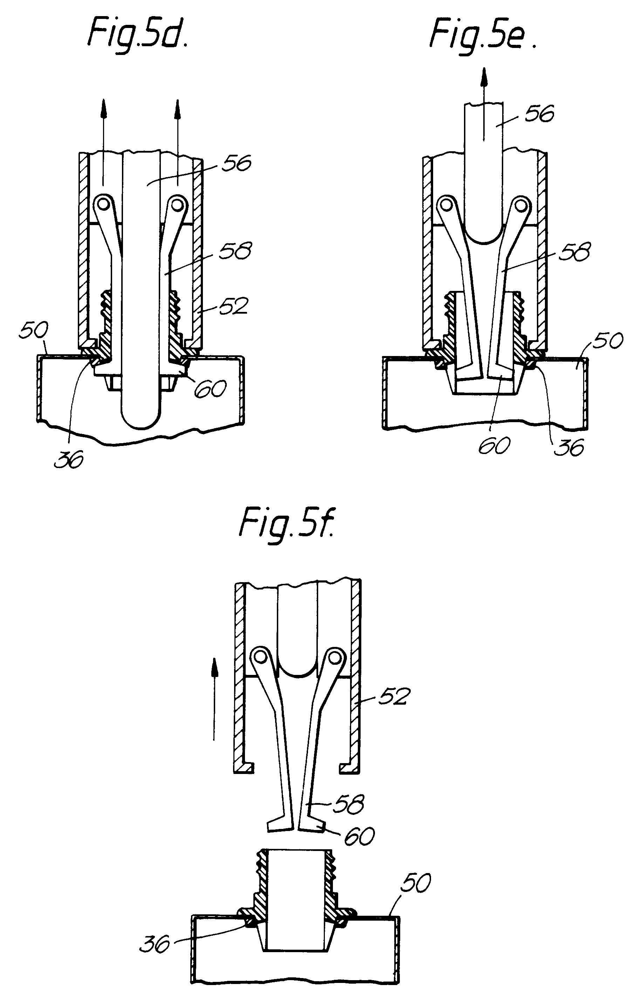

As shown in Fig. 5c the central pressure pin 56 is pushed towards the carton causing the fingers 58 to expand. The lugs 60 now project outwardly beyond the ring 36. The plunger 54 and the attached fingers 58 are now drawn outwards with the result that the lugs 60 pull the ring 36 up the tapering fingers 16 onto the first section 14 of the tapering portion of the fitting. The lugs 60 are made sufficiently narrow that they can be pulled into the gaps 18 between the legs 16. As shown by Fig. 5d the ring is pulled along the tapering fingers until it comes onto the first section 14 adjacent the flange 10. The step 38 snaps over the step 24 so that the ring 36 is retained in the position shown in Fig. 4. The cartonboard around the hole is now compressed between the ring 36 and the flange 10.

To detach the tool, the pressure pin 56 is withdrawn allowing the fingers 58 to retract radially inwardly as shown in Fig. 5e. The entire tool can now be moved away from the carton as shown in Fig. 5f.

Various modifications are possible. The legs 16 could be replaced by a circumferentially continuous second section of the tubular portion 12, especially if the fitting was attached to the cartonboard by working from both sides.

The step 24 need not extend fully circumferentially; for instance it could be provided at the top of the legs 16 but not between them.

The fingers 58 could be retracted radially by appropriate shaping of the plunger 56, rather than by spring bias.

## Claims

1. A two-part fitting for attaching to a container made at least partly of sheet material (44), at a hole through said sheet material, said fitting having a first part which comprises a flange (10) and a generally tubular portion (12) extending from the flange, which tubular portion comprises a first section (14) adjacent the flange and a second section which is a continuation of the first section, said fitting having a second part which comprises a ring (36) fitting over the tapering second section characterised in that the second section has an exterior (17) which in the direction extending away from the flange tapers to a smaller cross-section than that of the first section and the ring is dimensioned to become stretched upon driving the ring axially along the second section onto the first section, the first section and the ring being shaped to engage together, thereby to retain the stretched ring tightly encircling the first section proximate the flange.

2. A fitting according to claim 1 wherein the ring, in unstretched condition and fitted over the smallest part of the tapering portion, has lateral dimensions which do not substantially exceed the lateral dimensions of the first section of the tubular portion adjacent the flange.

3. A fitting according to claim 1 or claim 2 wherein the difference in lateral dimensions between the smallest part of the second section and the first section adjacent the flange is sufficient to accommodate the lateral thickness of the ring, whereby the unstretched ring does not need to project laterally substantially beyond the lateral dimensions of the first section of the tubular portion, adjacent the flange.

4. A fitting according to any one of the preceding claims wherein the second section is shaped (26) to engage the unstretched ring so as to retain the ring on the second section prior to driving it along the tubular portion towards the flange.

5. A fitting according to any one of the preceding claims wherein at least a distal part of the second section, remote from the flange, comprises a plurality of axially extending members (16) with axial gaps (18) between them.

6. A fitting according to any one of the preceding claims having the unstretched ring joined to the first part of the fitting by one or more breakable links.

7. A fitting according to any one of the preceding claims wherein the flange projects from the first section by not more than 15% of the lateral width of the tubular portion adjacent the flange.

8. A fitting according to any one of the preceding claims having a second tubular portion (28) extending from the flange on the opposite side to the first said tubular portion.

9. A container (50) made at least partly of sheet material (44) with a hole through the sheet material of the container and a fitting according to claim 1 attached to the sheet material so as to lead through the hole, the flange abutting the sheet material around the hole, the tubular portion extending from the flange through the hole and the ring tightly encircling the first section of the tubular portion and abutting the sheet material on the opposite side thereof to the flange.

10. A process for attaching a fitting according to any one of claims 1 to 8 to a hole through sheet material of a container, comprising inserting the tubular portion through the hole and driving the ring along the tubular portion until the sheet material around the hole is trapped between the flange and the expanded ring.

11. A process according to claim 10 wherein the driving step comprises:
i) inserting a laterally expansible tool through the tubular portion;
ii) expanding the tool laterally and drawing the tool back so as to drive the ring along the tubular portion until the sheet material around the hole is trapped between the flange and the expanded ring.

## Patentansprüche

1. Zweiteilige Einrichtung zur Befestigung an einem mindestens teilweise aus Schichtmaterial (44) hergestellten Behälter an einem Loch durch das besagte Schichtmaterial, wobei die besagte Einrichtung ein erstes Teil aufweist, das einen Flansch (10) und ein allgemein röhrenförmiges Teilstück (12) umfaßt, das sich vom Flansch aus erstreckt, wobei dieses röhrenförmige Teilstück einen ersten Abschnitt (14) angrenzend an den Flansch und einen zweiten Abschnitt umfaßt, der eine Fortsetzung des ersten Abschnitts ist, wobei die besagte Einrichtung ein zweites Teil aufweist, das einen Ring (36) umfaßt, der über den sich verjungenden zweiten Abschnitt paßt, dadurch gekennzeichnet, daß der zweite Abschnitt eine Außenseite (17) aufweist, die sich in der vom Flansch weg verlaufenden Richtung auf einen kleineren Querschnitt als demjenigen des ersten Abschnitts verjüngt, und daß der Ring so bemessen ist, daß er bei einem Treiben des Rings in axialer Richtung entlang des zweiten Abschnitts auf den ersten Abschnitt gedehnt wird, wobei der erste Abschnitt und der Ring so geformt sind, daß sie miteinander in Eingriff treten, um dadurch den gedehnten, den ersten Abschnitt nahe dem Flansch eng umfassenden Ring festzuhalten.

2. Einrichtung nach Anspruch 1, bei welcher der Ring in ungedehntem Zustand und über den kleinsten Teil des sich verjüngenden Teilstücks gepaßt seitliche Abmessungen aufweist, welche die seitlichen Abmessungen des ersten Abschnitts des röhrenförmigen Teilstücks angrenzend an den Flansch nicht wesentlich übersteigen.

3. Einrichtung nach Anspruch 1 oder Anspruch 2, bei welcher die Differenz der seitlichen Abmessungen zwischen dem kleinsten Teil des zweiten Abschnitts und dem ersten Abschnitt angrenzend an den Flansch ausreichend ist, um Platz für die seitliche Dicke des Rings zu haben, wodurch der ungedehnte Ring in seitlicher Richtung nicht wesentlich über die seitlichen Abmessungen des ersten Abschnitts des röhrenförmigen Teilstücks angrenzend an den Flansch überstehen braucht.

4. Einrichtung nach einem beliebigen der vorangehenden Ansprüche, bei welcher der zweite Abschnitt für einen Eingriff mit dem ungedehnten Ring gestaltet ist (26), um so den Ring auf dem zweiten Abschnitt festzuhalten, bevor er am röhrenförmigen Teilstück entlang in Richtung des Flanschs getrieben wird.

5. Einrichtung nach einem beliebigen der vorangehenden Ansprüche, bei welcher mindestens ein vom Flansch entfernter distaler Teil des zweiten Abschnitts eine Mehrzahl von axial verlaufenden Elementen (16) mit axialen Zwischenräumen (18) zwischen diesen umfaßt.

6. Einrichtung nach einem beliebigen der vorangehenden Ansprüche, bei welcher der ungedehnte Ring durch ein oder mehr zerbrechliche Bindeglieder mit dem ersten Teil der Einrichtung verbunden ist.

7. Einrichtung nach einem beliebigen der vorangehenden Ansprüche, bei welcher der Flansch vom ersten Abschnitt aus um nicht mehr als 15 % der seitlichen Breite des röhrenförmigen Teilstücks angrenzend an den Flansch übersteht.

8. Einrichtung nach einem beliebigen der vorangehenden Ansprüche, mit einem zweiten röhrenförmigen Teilstück (28), das sich auf der dem ersten besagten röhrenförmigen Teilstück entgegengesetzten Seite vom Flansch aus erstreckt.

9. Mindestens teilweise aus Schichtmaterial (44) hergestellter Behälter (50) mit einem Loch durch das Schichtmaterial des Behälter und einer Einrichtung nach Anspruch 1, die am Schichtmaterial befestigt ist, so daß sie durch das Loch führt, wobei der Flansch gegen das Schichtmaterial um das Loch herum anstößt, wobei sich das röhrenförmige Teilstück vom Flansch aus durch das Loch erstreckt, und der Ring den ersten Abschnitt des röhrenförmigen Teils eng anliegend umfaßt und gegen das Schichtmaterial auf dessen dem Flansch entgegengesetzter Seite anstößt.

10. Verfahren zum Befestigen einer Einrichtung nach einem beliebigen der Ansprüche 1 bis 8 an einem Loch durch Schichtmaterial eines Behälters, umfassend ein Einführen des röhrenförmigen Teilstücks durch das Loch und ein Treiben des Rings am röhrenförmigen Teilstück entlang, bis das Schichtmaterial um das Loch herum zwischen dem Flansch und dem gedehnten Ring eingeschlossen ist.

11. Verfahren nach Anspruch 10, bei welchem der Schritt eines Treibens umfaßt:
i) ein Einführen eines in seitlicher Richtung aufweitbaren Werkzeugs durch das röhrenförmige Teilstück;
ii) ein Aufweiten des Werkzeugs in seitlicher Richtung und ein Zurückziehen des Werkzeugs, um so den Ring am röhrenförmigen Teilstück entlangzuziehen, bis das Schichtmaterial um das Loch herum zwischen dem Flansch und dem gedehnten Ring eingeschlossen ist.

## Revendications

1. Un raccord de goulot en deux parties destiné à être fixé à un récipient composé au moins partiellement d'un matériau en feuilles (44), au niveau d'un orifice pratiqué à travers ledit matériau en feuilles, ledit raccord de goulot présentant une première partie comprenant une bride de fixation (10) et une portion généralement tubulaire (12) qui s'étend depuis la bride de fixation, laquelle portion tubulaire comprend une première section (14) adjacente à la bride de fixation, et une seconde section qui est le prolongement de la première section, ledit raccord de goulot présentant une seconde partie qui comprend une bague (36) qui s'ajuste sur la seconde section rétrécie en bout, caractérisé en ce que la seconde section présente une face extérieure (17) qui, dans la direction qui s'étend à l'opposé de la bride de fixation se rétrécit en une coupe transversale plus étroite que celle de la première section, et en ce que la bague est dimensionnée de façon à être étirée lorsque la bague est amenée axialement le long de la seconde section sur la première section, la première section et la bague présentant une configuration leur permettant de s'engager l'une dans l'autre, ce qui contribue ainsi à maintenir hermétiquement la bague étirée autour de la première section à proximité de la bride de fixation.

2. Un raccord de goulot selon la Revendication 1, dans lequel la bague à l'état non étiré et fixée sur la partie la plus étroite de la portion rétrécie en bout, présente des dimensions latérales qui ne dépassent substantiellement pas les dimensions latérales de la première section de la portion tubulaire adjacente à la bride de fixation.

3. Un raccord de goulot selon la Revendication 1 ou 2, dans lequel la différence de dimensions latérales entre la partie la plus étroite de la seconde section et la première section adjacente à la bride de fixation est suffisante pour s'adapter à l'épaisseur latérale de la bague, ce qui fait que la bague non étirée n'a pas besoin de dépasser latéralement substantiellement au-delà des dimensions latérales de la première section de la portion tubulaire adjacente à la bride de fixation.

4. Un raccord de goulot selon l'une quelconque des Revendications précédentes, dans lequel la seconde section présente une configuration (26) lui permettant de s'engager dans la bague non étirée de façon à maintenir la bague sur la seconde section avant de la passer le long de la portion tubulaire vers la bride de fixation.

5. Un raccord de goulot selon l'une quelconque des Revendications précédentes, dans lequel au moins une partie distale de la seconde section, éloignée de la bride de fixation, est composée de plusieurs éléments qui s'étendent axialement (16), présentant entre eux des écartements axiaux (18).

6. Un raccord de goulot selon l'une quelconque des Revendications précédentes présentant la bague non étirée assemblée à la première partie du raccord de goulot au moyen d'un ou de plusieurs éléments de liaison amovibles.

7. Un raccord de goulot selon l'une quelconque des Revendications précédentes, dans lequel la bride de fixation s'étend depuis la première section tout au plus à raison de 15 % de la largeur latérale de la portion tubulaire adjacente à la bride de fixation.

8. Un raccord de goulot selon l'une quelconque des Revendications précédentes, présentant une seconde portion tubulaire (28) qui s'étend depuis la bride de fixation sur le côté opposé à ladite première portion tubulaire.

9. Un récipient (50) composé au moins partiellement de matériau en feuilles (44) présentant un orifice pratiqué à travers le matériau en feuilles du récipient et un raccord de goulot selon la Revendication 1 fixé au matériau en feuilles de façon à conduire à travers l'orifice, la bride de fixation aboutissant le matériau en feuilles autour de l'orifice, la portion tubulaire s'étendant depuis la bride de fixation à travers l'orifice et la bague encerclant hermétiquement la première section de la portion tubulaire et aboutissant à la bride de fixation le matériau en feuilles sur le côté opposé de celle-ci.

10. Un procédé de fixation d'un raccord de goulot selon l'une des Revendications 1 à 8, à un orifice pratiqué dans le matériau en feuilles d'un récipient, consistant à insérer la portion tubulaire dans l'orifice et à passer la bague le long de la portion tubulaire jusqu'à ce que le matériau en feuilles autour de l'orifice soit bloqué entre la bride de fixation et la bague qui dépasse.

11. Un procédé selon la Revendication 10, dans lequel l'étape permettant de passer la bague consiste à
i) insérer un outil expansible sur le plan latéral à travers la portion tubulaire ;
ii) étendre l'outil sur le plan latéral et retirer l'outil de façon à amener la bague le long de la portion tubulaire jusqu'à ce que le matériau en feuilles autour de l'orifice soit bloqué entre la bride de fixation et la bague qui dépasse.
